# EUROPÄISCHE PATENTANMELDUNG

(11) **EP 3 361 355 A1**
(43) Veröffentlichungstag der Anmeldung: **15.08.2018**
(21) Anmeldenummer: 18153335.7
(22) Anmeldetag: 25.01.2018
(51) Int. Cl.: G06F 3/01, G06T 19/00, H04N 13/363, G02B 27/01, G01C 21/36

(54) **VERFAHREN, VORRICHTUNG UND COMPUTERLESBARES SPEICHERMEDIUM MIT INSTRUKTIONEN ZUR STEUERUNG EINER ANZEIGE EINER AUGMENTED-REALITY-HEAD-UP-DISPLAY-VORRICHTUNG**

(30) Priorität: 13.02.2017 DE 102017202225
(71) Anmelder: VOLKSWAGEN AKTIENGESELLSCHAFT, 38440 Wolfsburg (DE)
(72) Erfinder: Sadovitch, Vitalij, 38102 Braunschweig (DE); Wittkämper, Michael, 38106 Braunschweig (DE); Tümler, Johannes, 39167 Wellen (DE); Wyszka, Robert Jan, 30169 Hannover (DE)

(57) **Zusammenfassung**

Ein Verfahren, eine Vorrichtung und ein computerlesbares Speichermedium mit Instruktionen zur Steuerung einer Anzeige einer Augmented-Reality-Head-up-Display-Vorrichtung für ein Kraftfahrzeug sowie eine Augmented-Reality-Head-up-Display-Vorrichtung für ein Kraftfahrzeug. In einem ersten Schritt wird eine Position für eine Darstellung eines virtuellen Objektes vor dem Kraftfahrzeug bestimmt (20). Das virtuelle Objekt wird dann entsprechend der bestimmten Position durch eine bildgebende Einheit auf einer Projektionsfläche eingeblendet (21). Zur Erhöhung des subjektiven Empfindens der Registrierungsgüte beim Betrachter ist das virtuelle Objekt dabei fehlertolerant hinsichtlich Registrierungsfehlern ausgestaltet.

## Beschreibung

Die vorliegende Erfindung betrifft ein Verfahren, eine Vorrichtung und ein computerlesbares Speichermedium mit Instruktionen zur Steuerung einer Anzeige einer Augmented-Reality-Head-up-Display-Vorrichtung für ein Kraftfahrzeug. Die Erfindung betrifft weiterhin eine Augmented-Reality-Head-up-Display-Vorrichtung für ein Kraftfahrzeug sowie ein Kraftfahrzeug, in dem ein erfindungsgemäßes Verfahren, eine erfindungsgemäße Vorrichtung oder eine erfindungsgemäße Augmented-Reality-Head-up-Display-Vorrichtung eingesetzt wird.

Mit der stetigen Weiterentwicklung von Virtual & Augmented Reality-Technologien und - Anwendungen finden diese auch Einzug in das Automobil. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt.

Eine mögliche technische Realisierung, um den Fahrerarbeitsplatz entsprechend mit perspektivisch korrekten virtuellen Erweiterungen anzureichern, bietet das Head-Up-Display (HUD). Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeuges wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss. Aktuelle Serien-HUDs beschränken sich jedoch auf Anzeigen direkt unter dem primären Sichtbereich des Fahrers und enthalten redundante Informationen, wie z.B. die Geschwindigkeitsanzeige, die auch an anderer Stelle im Cockpit wiederzufinden sind. Diese Anzeigetechnologie reduziert zwar Blickabwendungen von der Straße, hat aber weiterhin den Nachteil, dass die präsentierten Informationen interpretiert und auf die reale Situation übertragen werden müssen, da sie nicht in der realen Szene registriert sind. Dies kann in komplexen Situationen einen mental beanspruchenden kognitiven Prozess darstellen. Durch Markieren von Objekten und Einblenden von Informationen an ihrem realen Bezugsort, d.h. durch eine kontaktanaloge Darstellung, lassen sich umweltbezogene Informationen im Sichtfeld des Fahrers direkt darstellen. Diese direkte grafische Anreicherung der Umwelt in Form von Augmented Reality kann die kognitiven Transferanforderungen erheblich reduzieren.

Augmented Reality bietet vielfältige Anwendungsmöglichkeiten zur Unterstützung des Fahrers durch kontaktanaloge Markierung von Fahrbahnen und Objekten. Relativ naheliegende Beispiele beziehen sich meist auf den Bereich der Navigation. Während klassische Navigationsanzeigen in herkömmlichen HUDs in der Regel schematische Darstellungen anzeigen, z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, sind äußerst schnelle und intuitive Interpretationen durch den Nutzer möglich.

Eine Registrierung der virtuellen Informationen im realen Sichtfeld des Fahrers im Sinne von Augmented Reality stellt sehr hohe Anforderungen an die technische Umsetzung. Um virtuelle Inhalte ortsgenau und perspektivisch korrekt in der Realität darstellen zu können ist sehr detailliertes Wissen über die Umgebung und Eigenbewegung des Fahrzeuges notwendig.

Umweltwissen liegt beispielsweise in Form von digitalen Karten vor und kann zusätzlich durch sensorische Umfelderfassung des Fahrzeuges oder anderer Fahrzeuge generiert werden, wobei für letzteres eine Car-2-Car-kommunikation erforderlich ist. In beiden Fällen ist mit Begrenzungen der Präzision zu rechnen. So ist z.B. das Kartenmaterial heutzutage überwiegend zweidimensional und enthält kein oder nur ein sehr ungenaues Höhenprofil der Straße. Die sensorische Erfassung des Umfeldes wiederrum ist den Begrenzungen der Sensoren sowie Umgebungs- und Umwelteinflüssen unterworfen. So kann beispielsweise die Breite einer Fahrspur nur bei vorhandenen Spurmarkierungen einigermaßen präzise ermittelt werden.

Auch die Verortung des Fahrzeuges ist z.B. abhängig von der GPS-Güte (GPS: Global Positioning System; Globales Positionsbestimmungssystem). Differential-GPS bietet lediglich eine Präzision von etwa 3m. Außerdem ist für eine perspektivisch korrekte virtuelle Einblendung auch die Lage des Fahrzeuges im dreidimensionalen Raum relevant, die sich durch Nick-, Wank- und Gierbewegungen permanent ändert. Eine Erfassung durch Drehraten- und Beschleunigungssensoren ist hinreichend präzise möglich. Jedoch ist dieses Wissen nur in Kombinationen mit einem detaillierten Wissen über das Krümmungsprofil der Straße hilfreich, da relative Fahrzeugbewegungen zur Fahrbahn für die AR-Anzeige ausgeglichen werden müssen.

Es gibt eine Reihe von Einflussfaktoren entlang der Informationsverarbeitungskette, die zu Diskrepanzen zwischen virtuellen Einblendungen und realen Objekten führen und somit die Güte der Überlagerung bzw. Erweiterung der realen Szene reduzieren. Zu nennen sind unter anderem Erfassungsfehler im Rahmen der sensorischen Umfelderfassung, Fehler beim Tracking, beispielsweise bei der Lokalisierung des Fahrzeuges oder der Fahrerbeobachtung, Fehler beim Rendering, d.h. bei der Generierung der einzublendenden virtuellen Objekte, Fehler bei der Projektion, z.B. durch falsch justierte Komponenten im HUD, oder auch Fehler bei der Betrachtung durch den Fahrer, verursacht beispielsweise durch die visuelle Wahrnehmung, die Aufmerksamkeit oder die Erwartung des Fahrers.

Sogenannte Registrierungsfehler, die aufgrund der beschriebenen Einflussfaktoren entstehen und sich in einer Fehlpositionierung der virtuellen Inhalte in der realen Szene niederschlagen, können in sechs Freiheitsgraden auftreten:
- Freiheitsgrade der Positionierung: X, Y, Z
- Freiheitsgrade der Orientierung: Yaw, Pitch, Roll (Gierwinkel, Nickwinkel, Rollwinkel)

Diese Fehlertypen können statisch, ohne jegliche Bewegung des Egofahrzeuges oder von Objekten in der Szene auftreten. Durch Latenzen in der Informationsverarbeitungskette ist jedoch auch ein dynamisches Auftreten möglich, wenn sich Objekte in der Szene oder das Egofahrzeug bewegen. Latenzen gelten als stärkster Einflussfaktor für Registrierungsfehler.

Vor diesem Hintergrund beschreibt die WO 2017/079162 A1 ein Verfahren zur Darstellung von virtuellen Objekten in Augmented Reality-Systemen, Virtual Reality-Systemen oder immersiven Anzeigesystemen für die realistische Wiedergabe eines weiten Sichtfeldes, bei dem die Bilder der virtuellen Objekte korrigiert werden können, um die Reduzierung von Registrierungsfehlern in Bezug auf reale Objekte oder Orte zu ermöglichen. Die Korrektur erfolgt insbesondere auf Grundlage einer optischen Verzerrung.

Der Artikel R.L. Holloway: "Registration Error Analysis for Augmented Reality", Presence: Teleoperators and Virtual Environments, Jg. 6 (1997), S. 413-432, beschreibt eine Ende-zu-Ende-Fehleranalyse eines Tools für die Operationsplanung, das auf einem See-Through Head-Mounted Display basiert. Die Analyse nutzt ein mathematisches Modell des Systems und ermöglicht es, die Empfindlichkeit eines Systemregistrierungsfehlers gegenüber Fehlern in jedem Teil des Systems zu analysieren.

Typischerweise wird versucht, die objektiv messbaren statischen oder dynamischen Registrierungsfehler durch Optimierung der Hardware oder Software zu verringern. Derartige Optimierungen sind regelmäßig mit hohen Kosten verbunden.

Beispielsweise beschreibt die DE 10 2014 013 408 A1, welche die Basis für den Oberbegriff des Anspruchs 1 bildet, ein Verfahren zur Darstellung von Umgebungsinformationen eines Fahrzeugs, bei dem reale optische Umgebungsinformationen mit virtuellen Bilddaten überlagert werden. Mittels zumindest einer Erfassungseinheit wird eine in Fahrtrichtung vor dem Fahrzeug befindliche Fahrbahnoberfläche erfasst und ein Höhenverlauf der Fahrbahnoberfläche erkannt. In Abhängigkeit des Höhenverlaufs wird eine zukünftige Eigenbewegung des Fahrzeugs prädiziert und in Abhängigkeit der zukünftigen Eigenbewegung werden die virtuellen Bilddaten lagerichtig den realen optischen Umgebungsinformationen überlagert dargestellt.

Es ist eine Aufgabe der Erfindung, alternative Lösungen für die Steuerung einer Anzeige einer Augmented-Reality-Head-up-Display-Vorrichtung für ein Kraftfahrzeug aufzuzeigen, die auf kostengünstige Weise das subjektive Empfinden der Registrierungsgüte beim Betrachter erhöhen.

Diese Aufgabe wird durch ein Verfahren mit den Merkmalen des Anspruchs 1, durch eine Vorrichtung mit den Merkmalen des Anspruchs 6, durch ein computerlesbares Speichermedium mit Instruktionen gemäß Anspruch 11 und durch eine Augmented-Reality-Head-up-Display-Vorrichtung gemäß Anspruch 12 gelöst. Bevorzugte Ausgestaltungen der Erfindung sind Gegenstand der abhängigen Ansprüche.

Gemäß einem ersten Aspekt der Erfindung umfasst ein Verfahren zur Steuerung einer Anzeige einer Augmented-Reality-Head-up-Display-Vorrichtung für ein Kraftfahrzeug die Schritte:
- Bestimmen einer Position für eine Darstellung eines virtuellen Objektes vor dem Kraftfahrzeug; und
- Einblenden des virtuellen Objektes entsprechend der bestimmten Position, wobei das virtuelle Objekt dahingehend fehlertolerant hinsichtlich Registrierungsfehlern ausgestaltet ist, dass Registrierungsfehler weniger salient in Erscheinung treten.

Gemäß einem weiteren Aspekt der Erfindung weist eine Vorrichtung zur Steuerung einer Anzeige einer Augmented-Reality-Head-up-Display-Vorrichtung für ein Kraftfahrzeug auf:
- Eine Positionierungseinheit zum Bestimmen einer Position für eine Darstellung eines virtuellen Objektes vor dem Kraftfahrzeug; und
- Eine Rendering-Einheit zum Einblenden des virtuellen Objektes entsprechend der bestimmten Position, wobei das virtuelle Objekt dahingehend fehlertolerant hinsichtlich Registrierungsfehlern ausgestaltet ist, dass Registrierungsfehler weniger salient in Erscheinung treten.

Gemäß einem weiteren Aspekt der Erfindung enthält ein computerlesbares Speichermedium Instruktionen, die bei Ausführung durch einen Computer den Computer zur Ausführung der folgende Schritte zur Steuerung einer Anzeige einer Augmented-Reality-Head-up-Display-Vorrichtung für ein Kraftfahrzeug veranlassen:
- Bestimmen einer Position für eine Darstellung eines virtuellen Objektes vor dem Kraftfahrzeug; und
- Einblenden des virtuellen Objektes entsprechend der bestimmten Position, wobei das virtuelle Objekt dahingehend fehlertolerant hinsichtlich Registrierungsfehlern ausgestaltet ist, dass Registrierungsfehler weniger salient in Erscheinung treten.

Der Begriff Computer ist dabei breit zu verstehen. Insbesondere umfasst er auch Steuergeräte und andere prozessorbasierte Datenverarbeitungsvorrichtungen.

In Abgrenzung zum bekannten Ansatz, die objektiv messbaren Registrierungsfehler durch Optimierung der Hardware oder Software zu verringern, wird bei den erfindungsgemäßen Lösungen die Wahrnehmung des Betrachters adressiert und das subjektive Empfinden der Registrierungsgüte erhöht. Dazu wird der subjektive Eindruck der Registrierungsgüte durch eine angepasste, fehlertolerante Anzeigengestaltung beeinflusst. Eine fehlertolerante Gestaltung von AR-Inhalten ist verzeihender gegenüber Registrierungsfehlern und kompensiert diese in der subjektiven Wahrnehmung des Betrachters.

Gemäß einem Aspekt der Erfindung markiert das virtuelle Objekt einen Navigationspfad, wobei die Breite des virtuellen Objektes schmaler ist als die Breite der vom Navigationspfad hervorgehobenen Fahrspur. Durch die Reduktion der Breite des virtuellen Elementes wird eine gewisse Abstraktion von den realen Spurgeometrien erreicht. Dies bewirkt, dass die Konturen des virtuellen Objektes, beispielsweise eine flächige Darstellung des Navigationspfades, erst bei einem stärkeren Registrierungsfehler die Spurmarkierungen schneiden. Außerdem nimmt das virtuelle Objekt auf diese Weise weniger Fläche ein und ragt somit bei einem Registrierungsfehler auch mit weniger Fläche über die zu markierende Spur hinaus. Dies bewirkt, dass der Fehler weniger salient in Erscheinung tritt, d.h. weniger auffällig ist.

Gemäß einem Aspekt der Erfindung markiert das virtuelle Objekt einen Navigationspfad, wobei das virtuelle Objekt in diskrete Elemente unterteilt ist. Durch eine Unterteilung des virtuellen Objektes in mehrere diskrete Elemente oder Teilbereiche lässt sich eine Reduzierung der vom virtuellen Objekt eingenommenen Fläche erzielen. Beispielsweise kann eine flächige Darstellung eines Navigationspfades in eine Abfolge von Streifen unterteilt werden. Ein derart unterteiltes virtuelles Objekt wird vom Betrachter weiterhin als ein zusammenhängendes Objekt wahrgenommen, da das menschliche Gehirn in der Lage ist, zusammenhängende Muster unbewusst zu komplementieren. Dieses visuelle Wahrnehmungsphänomen kann mit den Gestaltgesetzen der Wahrnehmungspsychologie begründet werden. Der Vorteil bei dieser Darstellung liegt, bei gleichbleibender Breite des virtuellen Objektes, in der kleineren Fläche, die bei auftretenden Registrierungsfehlern auf der Nachbarspur liegt. Zusätzlich kann selbstverständlich auch noch die Breite des virtuellen Objektes reduziert werden.

Gemäß einem Aspekt der Erfindung vermitteln die diskreten Elemente zusätzliche Informationen. Die Ansatz der Unterteilung des virtuellen Objektes lässt sich erweitern, indem das virtuelle Objekt mithilfe einer Symbolik der einzelnen Teile mit einem zusätzlichen Informationsgehalt versehen wird. Beispielsweise können die diskreten Elemente pfeilförmig ausgestaltet sein. Die zusätzliche Symbolik trägt zum intuitiven Verständnis der Anzeige bei. Zudem ist diese Art der Anzeige auch fehlertolerant gegenüber einem weiteren Registrierungsfehler, nämlich den Auf-und-ab-Bewegungen der Anzeige, die durch Nickbewegungen des Fahrzeuges verursacht werden. Da der Mensch auf der Fahrbahn aufgemalte Symbole kennt, weiß er aus der Erfahrung, dass diese Symbole normalerweise stabil an der Fahrbahn haften. Der Fahrer nimmt die Bewegungen der virtuellen Symbole subjektiv weniger wahr, da diese Bewegungen dem ihm gewohnten Verhalten widersprechen.

Gemäß einem Aspekt der Erfindung weisen das virtuelle Objekt oder die diskreten Elemente diffuse Kanten auf. Zusätzlich zur oder anstelle der Möglichkeit, die Geometrie des virtuellen Objektes zu verändern, ist es außerdem möglich, die Konturen des virtuellen Objektes bzw. der diskreten Elemente weicher auszugestalten. Eine diffuse Darstellung der Konturen führt bei gleicher Größe des virtuellen Objektes zwar zu einer gleich großen Fläche, die auf die Nachbarspur hinausragt. Jedoch ist auch hier der Überschnitt weniger salient.

Vorzugsweise werden eine erfindungsgemäße Augmented-Reality-Head-up-Display-Vorrichtung, ein erfindungsgemäßes Verfahren oder eine erfindungsgemäße Vorrichtung in einem autonom oder manuell gesteuerten Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch den allgemeinen Aufbau einer Head-up-Display-Vorrichtung für ein Kraftfahrzeug;
- Fig. 2: zeigt schematisch ein Verfahren zur Steuerung einer Anzeige einer Augmented-Reality-Head-up-Display-Vorrichtung für ein Kraftfahrzeug;
- Fig. 3: zeigt eine erste Ausführungsform einer Vorrichtung zur Steuerung einer Anzeige einer Augmented-Reality-Head-up-Display-Vorrichtung für ein Kraftfahrzeug;
- Fig. 4: zeigt eine zweite Ausführungsform einer Vorrichtung zur Steuerung einer Anzeige einer Augmented-Reality-Head-up-Display-Vorrichtung für ein Kraftfahrzeug;
- Fig. 5: stellt schematisch ein Kraftfahrzeug dar, in dem eine erfindungsgemäße Lösung realisiert ist;
- Fig. 6: illustriert eine flächige Darstellung eines Navigationspfades ohne und mit Registrierungsfehler;
- Fig. 7: illustriert eine flächige Darstellung eines Navigationspfades mit reduzierter Breite ohne und mit Registrierungsfehler;

- Fig. 8: illustriert eine flächige Darstellung eines Navigationspfades aus diskreten Elementen ohne und mit Registrierungsfehler;
- Fig. 9: illustriert eine flächige Darstellung eines Navigationspfades aus diskreten Elementen und mit reduzierter Breite ohne und mit Registrierungsfehler, wobei die diskreten Elemente zusätzliche Informationen vermitteln;.
- Fig. 10: illustriert eine flächige Darstellung eines Navigationspfades mit diffusen Kanten ohne und mit Registrierungsfehler;
- Fig. 11: illustriert eine flächige Darstellung eines Navigationspfades mit diffusen Kanten und reduzierter Breite ohne und mit Registrierungsfehler; und
- Fig. 12: zeigt schematisch die flächige Darstellung aus Fig. 11 aus der Sicht des Fahrers.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

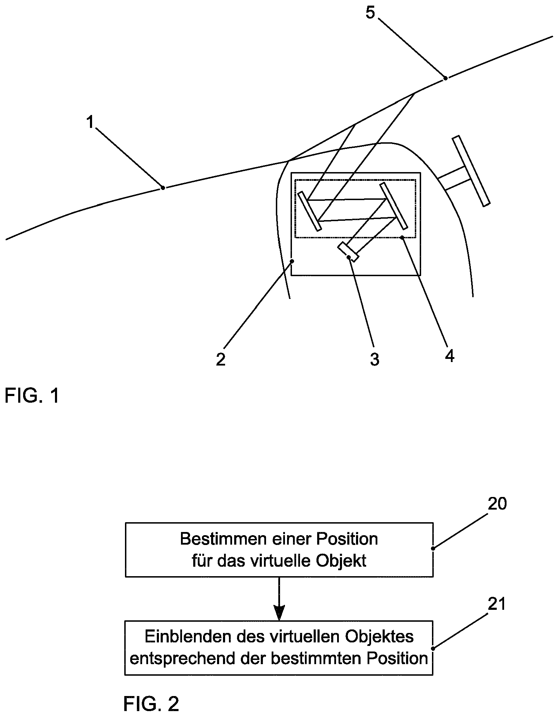

Fig. 1 zeigt schematisch eine Augmented-Reality-Head-up-Display-Vorrichtung 2 für ein Kraftfahrzeug 1, mit deren Hilfe Inhalte auf einer Projektionsfläche 5 des Kraftfahrzeuges 1 angezeigt werden können, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 3 erzeugt und mit Hilfe eines optischen Moduls 4 auf die Projektionsfläche 5 projiziert. Typischerweise erfolgt die Projektion dabei in einen Bereich der Frontscheibe oberhalb des Lenkrades. Die bildgebende Einheit 3 kann beispielsweise ein LCD-TFT-Display sein. Die Augmented-Reality-Head-up-Display-Vorrichtung 2 ist in der Regel in einem Armaturenbrett des Kraftfahrzeuges 1 verbaut.

Fig. 2 zeigt schematisch ein Verfahren zur Steuerung einer Anzeige einer Augmented-Reality-Head-up-Display-Vorrichtung für ein Kraftfahrzeug. In einem ersten Schritt wird eine Position für eine Darstellung eines virtuellen Objektes vor dem Kraftfahrzeug bestimmt 20. Das virtuelle Objekt wird dann entsprechend der bestimmten Position durch eine bildgebende Einheit auf einer Projektionsfläche eingeblendet 21. Zur Erhöhung des subjektiven Empfindens der Registrierungsgüte beim Betrachter ist das virtuelle Objekt dabei fehlertolerant hinsichtlich Registrierungsfehlern ausgestaltet.

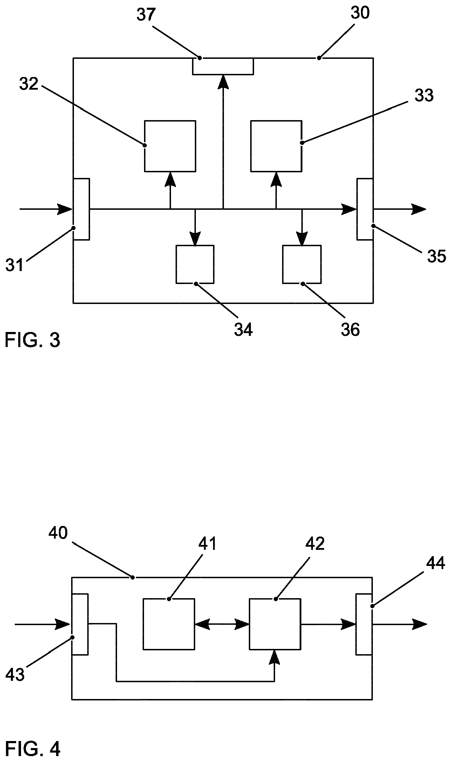

Fig. 3 zeigt eine vereinfachte schematische Darstellung einer ersten Ausführungsform einer Vorrichtung 30 zur Steuerung einer Anzeige einer Augmented-Reality-Head-up-Display-Vorrichtung für ein Kraftfahrzeug. Die Vorrichtung 30 kann Bestandteil der Augmented-Reality-Head-up-Display-Vorrichtung sein oder mit dieser über eine Datenverbindung verbunden sein. Die Vorrichtung 30 hat einen Eingang 31 zum Empfangen von Daten, die eine Bestimmung einer gewünschten Position für die Darstellung eines virtuellen Objektes vor dem Kraftfahrzeug erlauben. Aus den empfangenen Daten bestimmt eine Positionierungseinheit 32 die gewünschte Position für das virtuelle Objekt. Eine Rendering-Einheit 33 blendet dann mit Hilfe einer bildgebenden Einheit das virtuelle Objekt entsprechend der bestimmten Position auf einer Projektionsfläche ein. Die von der Rendering-Einheit 33 generierten Daten werden dazu der bildgebenden Einheit über einen Ausgang 35 der Vorrichtung 30 zur Verfügung gestellt. Die Positionierungseinheit 32 und die Rendering-Einheit 33 können von einer Kontrolleinheit 34 gesteuert werden. Über eine Benutzerschnittstelle 37 können gegebenenfalls Einstellungen der Positionierungseinheit 32, der Rendering-Einheit 33 oder der Kontrolleinheit 34 geändert werden. Die in der Vorrichtung 30 anfallenden Daten können zudem in einem Speicher 36 der Vorrichtung 30 abgelegt werden, beispielsweise für eine spätere Auswertung. Die Positionierungseinheit 32, die Rendering-Einheit 33 sowie die Kontrolleinheit 34 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft. Der Eingang 31 und der Ausgang 35 können als getrennte Schnittstellen oder als eine kombinierte bidirektionale Schnittstelle implementiert sein.

Fig. 4 zeigt eine vereinfachte schematische Darstellung einer zweiten Ausführungsform einer Vorrichtung 40 zur Steuerung einer Anzeige einer Augmented-Reality-Head-up-Display-Vorrichtung für ein Kraftfahrzeug. Die Vorrichtung 40 kann auch in diesem Fall Bestandteil der Augmented-Reality-Head-up-Display-Vorrichtung sein oder mit dieser über eine Datenverbindung verbunden sein. Die Vorrichtung 40 weist einen Prozessor 42 und einen Speicher 41 auf. Beispielsweise handelt es sich bei der Vorrichtung 40 um einen Computer oder ein Steuergerät. Im Speicher 41 sind Instruktionen abgelegt, die die Vorrichtung 40 bei Ausführung durch den Prozessor 42 veranlassen, die Schritte gemäß einem der beschriebenen Verfahren auszuführen. Die im Speicher 41 abgelegten Instruktionen verkörpern somit ein durch den Prozessor 42 ausführbares Programm, welches das erfindungsgemäße Verfahren realisiert. Die Vorrichtung hat einen Eingang 43 zum Empfangen von Informationen. Vom Prozessor 42 generierte Daten werden über einen Ausgang 44 bereitgestellt. Darüber hinaus können sie im Speicher 41 abgelegt werden. Der Eingang 43 und der Ausgang 44 können zu einer bidirektionalen Schnittstelle zusammengefasst sein.

Der Prozessor 42 kann eine oder mehrere Prozessoreinheiten umfassen, beispielsweise Mikroprozessoren, digitale Signalprozessoren oder Kombinationen daraus.

Die Speicher 36, 41 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

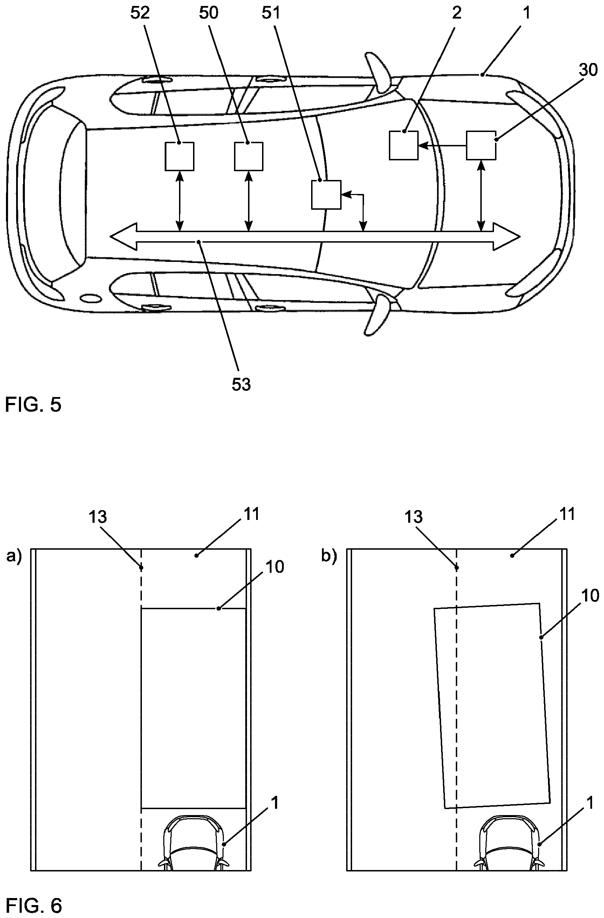

Fig. 5 stellt schematisch ein Kraftfahrzeug 1 dar, in dem eine erfindungsgemäße Lösung realisiert ist. Das Kraftfahrzeug weist eine Augmented-Reality-Head-up-Display-Vorrichtung 2 auf, mit der Informationen auf der Frontscheibe des Kraftfahrzeuges 1 oder auf einer zwischen Fahrer und Frontscheibe angeordneten zusätzlichen Scheibe (nicht gezeigt) dargestellt werden. Die Augmented-Reality-Head-up-Display-Vorrichtung 2 wird von einer Vorrichtung 30 zur Steuerung der Anzeige der Augmented-Reality-Head-up-Display-Vorrichtung 2 angesteuert. Zusätzlich weist das Kraftfahrzeug 1 ein Navigationssystem 50 und eine Umgebungssensorik 51 auf, beispielsweise ein Kamerasystem. Aus Navigationsdaten des Navigationssystems 50 oder Daten der Umgebungssensorik 51 wird ein virtuelles Objekt bestimmt, das von der Augmented-Reality-Head-up-Display-Vorrichtung 2 angezeigt werden soll. Die Vorrichtung 30 steuert die Augmented-Reality-Head-up-Display-Vorrichtung 2 entsprechend einer für die Darstellung des virtuellen Objektes bestimmten Position an. Die Übertragung der Daten innerhalb des Kraftfahrzeuges 1 erfolgt mit Hilfe eines Netzwerkes 53, an das weitere Steuergeräte 52 angeschlossen sein können.

Fig. 6 illustriert aus der Vogelperspektive eine bekannte kontaktanaloge Navigationsanzeige in Form einer flächigen Darstellung eines Navigationspfades. Diese Art der Darstellung eines Navigationspfades ist auch als Teppich-Darstellung bekannt, bei dem ein virtuelles Objekt 10 als Navigationshinweis die zu befahrende Spur 11 vor dem Fahrzeug 1 in ihrer gesamten Breite markiert. Fig. 6a) stellt die Situation im Idealzustand dar, d.h. ohne Registrierungsfehler. In Fig. 6b) liegt ein Registrierungsfehler vor, in diesem Beispiel in Form einer kleinen Drehung um die Z-Achse des Fahrzeuges 1 und eines seitlichen Versatzes gegenüber dem Fahrzeug 1. Aufgrund des Registrierungsfehlers schneidet das virtuelle Objekt 10 die Spurmarkierungen 13 auf der Fahrbahn. Da diese Form der Darstellung stark an den realen Geometrien der Spur orientiert ist, erscheint der Registrierungsfehler sehr salient und störend.

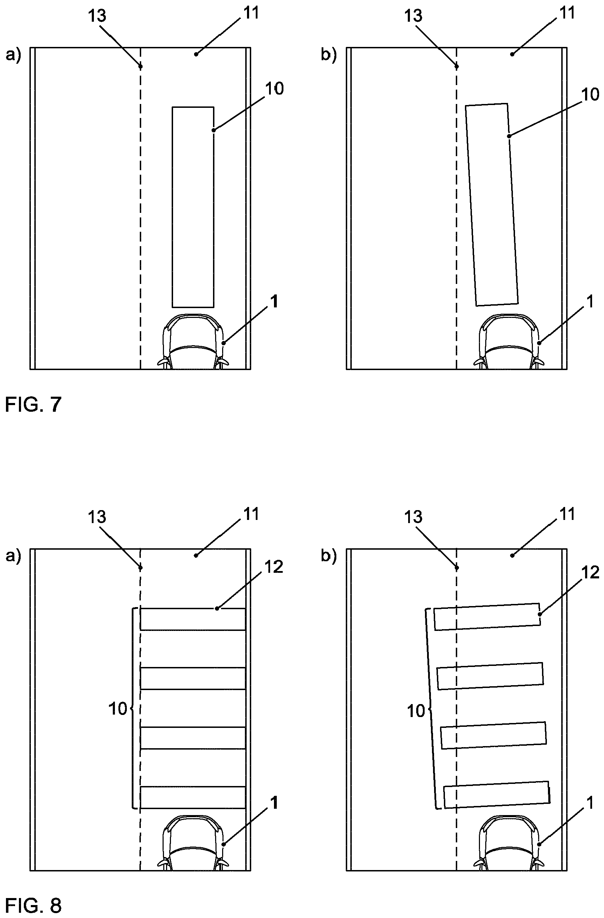

Nachfolgend sollen anhand der Figuren 7 bis 12 unterschiedliche Möglichkeiten aufgezeigt werden, wie sich die Fehlertoleranz des virtuellen Objektes hinsichtlich Registrierungsfehlern erreichen lässt.

Fig. 7 illustriert eine flächige Darstellung eines Navigationspfades mit reduzierter Breite. Fig. 7a) stellt die Situation im Idealzustand dar, d.h. ohne Registrierungsfehler. In Fig. 7b) liegt der bereits aus Fig. 6b) bekannte Registrierungsfehler vor. Durch die Reduzierung der Breite des virtuellen Objektes 10 gegenüber der Teppich-Darstellung aus Fig. 6 wird eine gewisse Abstraktion von den realen Spurgeometrien erreicht. Dies bewirkt, dass die Konturen des virtuellen Objektes 10 erst bei einem stärkeren Registrierungsfehler die Spurmarkierungen 13 schneiden. Obwohl die Registrierungsfehler in Fig. 6b) und Fig. 7b) identisch sind, liegt das virtuelle Objekt 10 in Fig. 7b) noch vollständig innerhalb der zu markierenden Spur 11. Außerdem nimmt das virtuelle Objekt 10 bei dieser Art der Darstellung weniger Fläche ein und ragt somit bei einem Registrierungsfehler auch mit weniger Fläche über die zu markierende Spur 11 hinaus. Dies bewirkt, dass der Fehler weniger salient in Erscheinung tritt.

Fig. 8 illustriert eine flächige Darstellung eines Navigationspfades aus diskreten Elementen. Fig. 8a) stellt die Situation im Idealzustand dar, d.h. ohne Registrierungsfehler. In Fig. 8b) liegt wiederum der aus Fig. 6b) bekannte Registrierungsfehler vor. Bei im Vergleich zur Teppich-Darstellung aus Fig. 6 gleichbleibender Ausprägung der Konturen und der Breite des virtuellen Objektes 10 lässt sich die Fläche des virtuellen Objektes 10 durch eine Unterteilung des virtuellen Objektes 10 in mehrere Teilbereiche reduzieren. Dazu wird das virtuelle Objekt 10 aus mehreren Elementen 12 zusammengesetzt. Da das menschliche Gehirn in der Lage ist, zusammenhängende Muster unbewusst zu komplementieren, wird das virtuelle Objekt 10 bei angemessener Unterteilung weiterhin als ein zusammenhängendes Objekt wahrgenommen. Dieses visuelle Wahrnehmungsphänomen kann mit den Gestaltgesetzen der Wahrnehmungspsychologie begründet werden (Gesetz der guten Fortsetzung, Gesetz der Nähe, etc.). Der Vorteil bei dieser Form der Darstellung liegt gegenüber der Teppich-Darstellung aus Fig. 6 in der kleineren Fläche, die aufgrund des Registrierungsfehlers auf der Nachbarspur liegt. Zusätzlich kann selbstverständlich auch noch die Breite des virtuellen Objektes 10 bzw. seiner Elemente 12 reduziert werden.

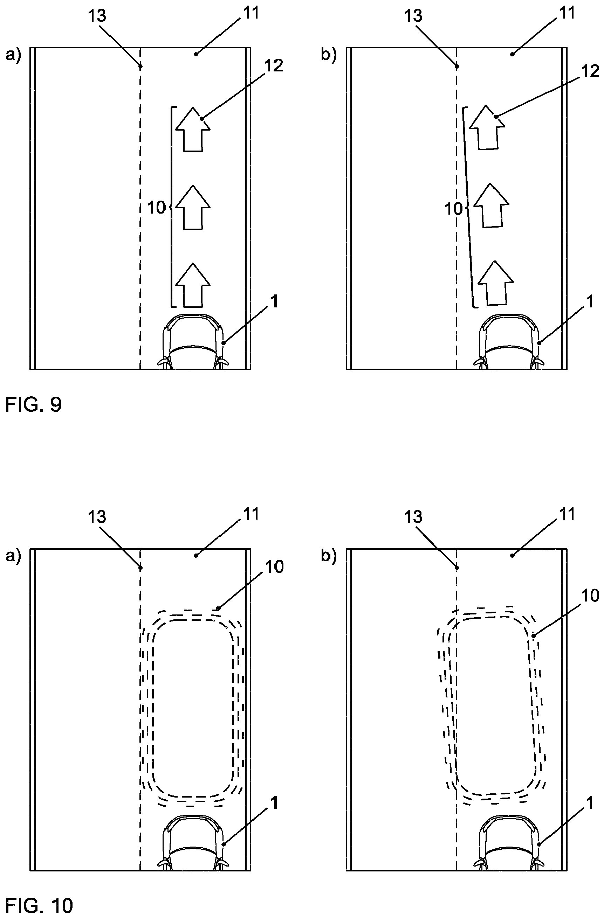

Fig. 9 illustriert eine flächige Darstellung eines Navigationspfades aus diskreten Elementen und mit reduzierter Breite, wobei die diskreten Elemente zusätzliche Informationen vermitteln. Fig. 9a) stellt die Situation im Idealzustand dar, d.h. ohne Registrierungsfehler. In Fig. 9b) liegt auch hier der aus Fig. 6b) bekannte Registrierungsfehler vor. Die Unterteilung des virtuellen Objektes 10 in diskrete Elemente 12 lässt sich erweitern, indem das virtuelle Objekt 10 nicht nur in Teilbereiche zerlegt wird, sondern mithilfe einer den einzelnen Elementen 12 innwohnenden Symbolik mit einem zusätzlichen Informationsgehalt versehen wird. In Fig. 9 beruht die Symbolik der Elemente 12 auf einer pfeilförmigen Gestaltung der Elemente 12. Die einzelnen pfeilförmigen Elemente 12 sind dabei vorzugsweise so ausgerichtet, dass sie dem Verlauf der zu markierenden Spur 11 folgen, insbesondere also auch einen gekrümmten Verlauf der Spur 11 wiedergeben. Diese Form der Darstellung bewirkt ebenfalls eine geringere Verdeckung als eine bloße Reduktion der Breite oder eine Zerlegung des virtuellen Objektes 10 in diskrete Teile. Die zusätzliche Symbolik trägt außerdem zum intuitiven Verständnis der Darstellung bei. Zusätzlich ist diese Anzeige auch fehlertolerant gegenüber einem durch Nickbewegungen des Fahrzeuges 1 verursachten Registrierungsfehler, bei dem Auf-und-ab-Bewegungen der Anzeige auftreten. Da der Mensch mit auf der Fahrbahn aufgemalten Pfeilen vertraut ist, weiß er aus der Erfahrung, dass diese Pfeile normalerweise stabil an der Fahrbahn haften. Der Fahrer nimmt die Bewegungen der virtuellen Pfeile subjektiv weniger wahr, da diese Bewegungen dem ihm gewohnten Verhalten widersprechen.

Fig. 10 illustriert eine flächige Darstellung eines Navigationspfades mit diffusen Kanten. Fig. 10a) stellt die Situation im Idealzustand dar, d.h. ohne Registrierungsfehler. In Fig. 10b) liegt erneut der aus Fig. 6b) bekannte Registrierungsfehler vor. Anstatt die Geometrie des virtuellen Objektes 10 zu verändern ist es ebenso möglich, die Konturen des virtuellen Objektes 10 weicher auszugestalten, d.h. das virtuelle Objekt 10 mit einem diffusen Randbereich zu versehen. In Fig. 10 ist dies du die gestrichelten Linien angedeutet. Eine diffuse Darstellung der Konturen führt bei gleicher Größe des virtuellen Objektes 10 zwar zu einer gleich großen Fläche, die die Spurmarkierungen 13 schneidet und auf die Nachbarspur hinausragt. Jedoch ist auch hier der Überschnitt erheblich weniger salient. Selbstverständlich ist es möglich, nur ausgewählte Kanten des virtuellen Objektes 10 diffus zu gestalten.

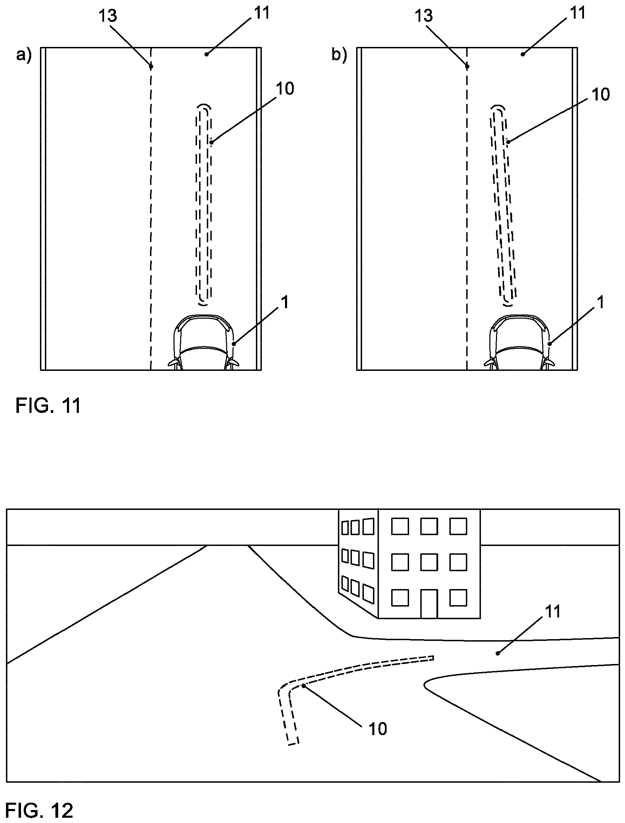

Die in Fig. 10 dargestellte Verwendung diffuser Kanten kann vorteilhaft mit einer reduzierten Breite des virtuellen Objektes 10 kombiniert werden. Eine derartige flächige Darstellung eines Navigationspfades mit diffusen Kanten und reduzierter Breite ist in Fig. 11 abgebildet. Fig. 11a) stellt die Situation im Idealzustand dar, d.h. ohne Registrierungsfehler. In Fig. 11b) liegt erneut der aus Fig. 6b) bekannte Registrierungsfehler vor. In diesem Beispiel weicht zum einen die Breite stark von der tatsächlichen Spurbreite ab, zum anderen sind keinerlei scharfe Konturen vorhanden, was wiederum durch die gestrichelten Linien angedeutet ist. Diese Form der Darstellung kann als Schlauch-Darstellung bezeichnet werden. Sie hat degenüber der in Fig. 10 gezeigten Darstellung den zusätzlichen Vorteil, dass nur ein sehr schmaler Bereich der Realität von einer virtuellen Überblendung verdeckt wird und das virtuelle Objekt 10 erst bei einem stärkeren Registrierungsfehler die Spurmarkierungen 13 schneidet. Bei der Festlegung der Breite des virtuellen Objektes 10 sind einige Randbedingungen zu berücksichtigen. Grundsätzlich gilt, dass die Augmented-Reality-Anzeige umso fehlertoleranter ist, je schmaler das virtuelle Objekt 10 ist. Weiterhin gilt, dass je schmaler das virtuelle Objekt 10 ist, desto weniger wird die Sicht auf die reale Umwelt durch die Einblendung verdeckt. Allerdings können unter der reduzierten Breite die Ablesbarkeit der Information und die subjektiv empfundene grafische Anmutung leiden. In Testfahrten hat sich eine Breite von 40 cm für die Schlauch-Darstellung bewährt. Bei diesen Testfahrten wurde außerdem festgestellt, dass bei der Verwendung der Schlauch-Darstellung für die Darstellung eines Navigationspfades nur wenige Abbiegefehler auftreten. Der Schlauch-Darstellung wurde von den Testpersonen zudem insbesondere bei eingeschränkter oder schwankender Sensorgüte gegenüber der Teppich-Darstellung der Vorzug gegeben.

Fig. 12 zeigt schematisch die Schlauch-Darstellung aus Fig. 11 (ohne Registrierungsfehler) aus der Sicht des Fahrers. Vor dem Fahrzeug liegt eine Rechtsabbiegung. Das virtuelle Objekt 10, dessen diffuse Kanten wie zuvor durch eine gestrichelte Linie angedeutet werden, folgt dem Verlauf der Fahrspur 11, d.h. es weist eine Krümmung nach rechts auf und markiert somit den bevorstehenden Fahrweg des Fahrzeuges.

Die drei beschriebenen Faktoren Abstraktion von der realen Geometrie der Spur, Unterteilung des virtuellen Objektes und diffuse Darstellung der Konturen lassen sich auch sinnvoll kombinieren. Dadurch entstehen Anzeigen, die zusätzliche Vorteile aufweisen und im Kontext einer Navigationsanzeige vom Fahrer tendenziell eher akzeptiert werden. Beispielsweise können die einzelnen Elemente 12 in Fig. 8 und Fig. 9 ihrerseits allseitig oder auch nur auf einigen Seiten diffuse Konturen aufweisen, beispielsweise nur bei den parallel zu den Spurmarkierungen 13 liegenden Kanten.

### Bezugszeichenliste

- 1: Kraftfahrzeug
- 2: Augmented-Reality-Head-up-Display-Vorrichtung
- 3: Bildgebende Einheit
- 4: Optisches Modul
- 5: Projektionsfläche
- 10: Virtuelles Objekt
- 11: Fahrspur
- 12: Element des virtuellen Objektes
- 13: Spurmarkierung
- 20: Bestimmen einer Position für das virtuelle Objekt
- 21: Einblenden des virtuellen Objektes entsprechend der bestimmten Position
- 30: Vorrichtung
- 31: Eingang
- 32: Positionierungseinheit
- 33: Rendering-Einheit
- 34: Kontrolleinheit
- 35: Ausgang
- 36: Speicher
- 37: Benutzerschnittstelle
- 40: Vorrichtung
- 41: Speicher
- 42: Prozessor
- 43: Eingang
- 44: Ausgang
- 50: Navigationssystem
- 51: Umgebungssensorik
- 52: Steuergerät
- 53: Netzwerk

## Patentansprüche

1. Verfahren zur Steuerung einer Anzeige einer Augmented-Reality-Head-up-Display-Vorrichtung (2) für ein Kraftfahrzeug (1), mit den Schritten:
- Bestimmen (20) einer Position für eine Darstellung eines virtuellen Objektes (10) vor dem Kraftfahrzeug (1); und
- Einblenden (21) des virtuellen Objektes (10) entsprechend der bestimmten Position; **dadurch gekennzeichnet, dass** das virtuelle Objekt (10) dahingehend fehlertolerant hinsichtlich Registrierungsfehlern ausgestaltet ist, dass Registrierungsfehler weniger salient in Erscheinung treten.

2. Verfahren gemäß Anspruch 1, wobei das virtuelle Objekt (10) einen Navigationspfad markiert und die Breite des virtuellen Objektes (10) schmaler ist als die Breite der vom Navigationspfad hervorgehobenen Fahrspur (11).

3. Verfahren gemäß Anspruch 1 oder 2, wobei das virtuelle Objekt (10) einen Navigationspfad markiert und in diskrete Elemente (12) unterteilt ist.

4. Verfahren gemäß Anspruch 3, wobei die diskreten Elemente (12) zusätzliche Informationen vermitteln.

5. Verfahren gemäß einem der vorherigen Ansprüche, wobei das virtuelle Objekt (10) oder die diskreten Elemente (12) diffuse Kanten (13) aufweisen.

6. Vorrichtung (30) zur Steuerung einer Anzeige einer Augmented-Reality-Head-up-Display-Vorrichtung (2) für ein Kraftfahrzeug (1), wobei die Vorrichtung (30) aufweist:
- Eine Positionierungseinheit (32) zum Bestimmen (10) einer Position für eine Darstellung eines virtuellen Objektes (10) vor dem Kraftfahrzeug (1); und
- Eine Rendering-Einheit (33) zum Einblenden (11) des virtuellen Objektes (10) entsprechend der bestimmten Position;
**dadurch gekennzeichnet, dass** das virtuelle Objekt (10) dahingehend fehlertolerant hinsichtlich Registrierungsfehlern ausgestaltet ist, dass Registrierungsfehler weniger salient in Erscheinung treten.

7. Vorrichtung (30) gemäß Anspruch 6, wobei das virtuelle Objekt (10) einen Navigationspfad markiert und die Breite des virtuellen Objektes (10) schmaler ist als die Breite der vom Navigationspfad hervorgehobenen Fahrspur (11).

8. Vorrichtung (30) gemäß Anspruch 6 oder 7, wobei das virtuelle Objekt (10) einen Navigationspfad markiert und in diskrete Elemente (12) unterteilt ist.

9. Vorrichtung (30) gemäß Anspruch 8, wobei die diskreten Elemente (12) zusätzliche Informationen vermitteln.

10. Vorrichtung (30) gemäß einem der Ansprüche 6 bis 9, wobei das virtuelle Objekt (10) oder die diskreten Elemente (12) diffuse Kanten (13) aufweisen.

11. Computerlesbares Speichermedium mit Instruktionen, die bei Ausführung durch einen Computer den Computer zur Ausführung der Schritte eines Verfahrens gemäß einem der Ansprüche 1 bis 5 zur Steuerung einer Anzeige einer Augmented-Reality-Head-up-Display-Vorrichtung (2) für ein Kraftfahrzeug (1) veranlassen.

12. Augmented-Reality-Head-up-Display-Vorrichtung (2) für ein Kraftfahrzeug (1), **dadurch gekennzeichnet, dass** sie eine Vorrichtung (30) gemäß einem der Ansprüche 6 bis 10 aufweist oder eingerichtet ist, ein Verfahren gemäß einem der Ansprüche 1 bis 5 zur Steuerung einer Anzeige der Augmented-Reality-Head-up-Display-Vorrichtung (2) auszuführen.

13. Kraftfahrzeug (40), **dadurch gekennzeichnet, dass** es eine Augmented-Reality-Head-up-Display-Vorrichtung (2) gemäß Anspruch 12 oder eine Vorrichtung (30) gemäß einem der Ansprüche 6 bis 10 aufweist oder eingerichtet ist, ein Verfahren gemäß einem der Ansprüche 1 bis 5 zur Steuerung einer Anzeige einer Augmented-Reality-Head-up-Display-Vorrichtung (2) auszuführen.
